# EUROPÄISCHE PATENTSCHRIFT

(11) **EP 2 340 963 B1**
(45) Veröffentlichungstag und Bekanntmachung des Hinweises auf die Patenterteilung: **18.09.2013**
(21) Anmeldenummer: 10193369.5
(22) Anmeldetag: 01.12.2010
(51) Int. Cl.: B60N 2/015, B64D 11/06

(54) **Sitzkonsole für einen Fahrgastsitz**
Seat console for a passenger seat
Console d'assise pour un siège passager

(30) Priorität: 09.12.2009 DE 102009057447
(43) Veröffentlichungstag der Anmeldung: 06.07.2011
(73) Patentinhaber: Sortimo Speedwave GmbH, 86441 Zusmarshausen (DE)
(72) Erfinder: Merkle, Bernd, 89343, Jettingen-Scheppach (DE)
(74) Vertreter: Rapp, Bertram

(56) Entgegenhaltungen:
- EP-A2- 2 253 500
- WO-A2-2008/113610
- DE-A1- 19 851 392
- DE-U1- 29 712 180

## Beschreibung

Die Erfindung betrifft eine Sitzkonsole für einen Fahrgastsitz, der gegenüber dem tragenden Boden verschiebbar und insbesondere demontierbar ist. Derartige Sitzkonsolen sind insbesondere gedacht für Fahrgastsitze in einem Kleinbus oder Omnibus oder einem anderen mit Fahrgastsitzen ausgestatteten Passagierraum.

Eine Sitzhalterung gemäß dem Oberbegriff von Anspruch 1 ist beispielsweise aus der EP 1 790 521 A1 bekannt. Zur verstellbaren Halterung eines Fahrgastsitzes gegenüber einer im Boden verankerten Schiene ist eine Fußplatte vorgesehen, an der mehrere nach unten ragende Führungsbolzen vorgesehen sind, die in Führungsnuten der Bodenschiene greifen. Die Fußplatte ist durch einen axial verstellbaren Zentrierbolzen fixierbar, der in eine Arretieröffnung an der Bodenschiene versenkt werden kann. Dieser Zentrierbolzen kann über einen Hebelmechanismus aus der Arretieröffnung gehoben werden, so dass dann die Fußplatte auf der Bodenschiene verschiebbar ist. Zur Realisierung einer möglichst spielfreien Fixierung der Fußplatte gegenüber der Bodenschiene ist letztere als biegsame Platte ausgebildet, die die an ihr festgelegten Führungsbolzen in der Ruhestellung der Fußplatte derart nach oben anhebt, dass die Führungsbolzen in einen reibschließenden Kontakt mit der Bodenschiene geraten. Nachteilhaft an dieser Ausführungsform ist jedoch, dass durch die Federvorspannung der biegsamen Fußplatte eine Kraft auf den an der Fußplatte in einer Buchse gehaltenen Zentrierbolzen wirkt, die den Zentrierbolzen immer aus seiner Arretierposition, d.h. aus der Arretieröffnung zu heben versucht. Um dieser Krafteinwirkung entgegenzutreten, ist deshalb ein Verriegelungsmechanismus vorgesehen, mit dem der Zentrierbolzen in seiner Arretierposition zu verriegeln ist.

Ähnliche Systeme zur Verstellung eines Fahrgastsitzes mittels einer auf Führungsschienen verfahrbar gehaltenen Grundplatte sind aus der US 4,114,947, der US 5,871,318 oder der EP 005 3923, und der WO 2008/113610A2 und DE 198 51 392 A1 bekannt. Die Führungsschienen sind jeweils in der Form eines liegenden C-Profils vorliegend, die einen Schraubkopf in dem nach oben offenen Profil verschiebbar führen. Der Schraubkopf ist durch die nach innen ragenden Flanken des C-Profils an der Öffnung in einer zur Verschiebrichtung Senkrechten grundsätzlich nicht aus der Profilschiene herausnehmbar. Will man den Schraubkopf in Öffnungsrichtung des Profils abziehen, sind hierzu spezielle Öffnungen im Profil vorgesehen. Gemäß der Druckschrift DE 198 51 392 A1 ist eine Sitzkonsole gezeigt, die verschiedene Bolzen an der Grundplatte hat, mit denen diese gegenüber einer Bodenschiene separat geführt, verspannt und arretiert wird. Ein Bedienhebel betätigt gleichzeitig den zur Verspannung vorgesehenen Spannbolzen mit dem Arretierbolzen.

Aufgabe der vorliegenden Erfindung ist es, eine verstellbare Sitzkonsole der eingangs genannten Art zu schaffen, die sowohl eine einfache Verstellung ermöglicht und eine genaue und sichere Halterung gewährleistet.

Diese Aufgabe wird durch eine Sitzkonsole gemäß den Merkmalen des Anspruchs 1 gelöst. Zweckmäßige Weiterbildungen und vorteilhafte Ausführungsformen der Erfindung gehen aus den jeweiligen Unteransprüchen hervor.

Bei der erfindungsgemäßen Sitzkonsole ist im Bodenbereich des Fahrgastraumes eine Bodenschiene vorgesehen, auf der eine Grundplatte in Längsrichtung der Bodenschiene verfahrbar gehalten ist. In der Bodenschiene ist ein Hohlprofil in der Form eines liegenden C eingearbeitet. In diesem Hohlprofil sind Führungsbolzen verfahrbar, die an ihrer einen Seite einen vom Hohlprofil umschlossenen pilzförmigen Kopf haben, an dem ein Bolzenstift abragt. Dieser Bolzenstift ist an der Grundplatte festgelegt. Die erfindungsgemäße Sitzkonsole weist nun zwei Arten eines solchen Führungsbolzens auf: Um die Grundplatte vornehmlich vor einer seitwärtigen Verschiebung, d.h. vor einer zur Längsrichtung der Schiene abgewinkelten Richtung, zu bewahren, ist mindestens ein Führungsstift vorgesehen, der reibschlussfrei mit seinem pilzförmigen Kopf in dem Hohlprofil der Bodenschiene verfahrbar ist. Ferner ist als Führungsbolzen mindestens ein Spannbolzen vorgesehen, der gleichermaßen einen pilzförmigen Kopf trägt, mit dem der Spannbolzen in dem Profil der Bodenschiene verfahrbar ist. Während der Führungsstift nun an der Grundplatte nach anfänglicher Justierung an der Grundplatte an dieser fixiert ist, ist der Spannbolzen derart an der Grundplatte gehalten, dass er entlang seiner Längsachse relativ zur Grundplatte verschiebbar ist. Mittels einer solchen zur Grundplatte im Wesentlichen rechtwinkligen Verschiebung kann der pilzförmige Kopf des Spannbolzens in einen Klemmkontakt mit den Flanken des "C"-förmigen Hohlprofils gebracht werden. Von dem Spannbolzen wie auch von dem Führungsstift kann/können jeweils eine Mehrzahl vorgesehen sein, um die Grundplatte auf der Bodenschiene verfahrbar zu halten.

Um die beiden Arten des Führungsbolzens mit seinem jeweiligen pilzförmigen Kopf aus dem C-Profil abnehmen zu können, ist in dessen Flanken an der Öffnungsseite eine jeweilige Aussparung vorgesehen, die im Durchmesser etwas größer ist als der Durchmesser des jeweiligen Pilz- oder Schraubkopfes. Durch das Vorsehen dieser Aussparungen ist es möglich, die gesamte Grundplatte an speziellen Positionen oder an einer einzigen speziellen Position von der Bodenschiene abzuheben, die durch die relative Lage zwischen Bodenschiene und Grundplatte bestimmt sind. Damit kann dann die Sitzkonsole mitsamt dem darauf montierten Fahrgastsitz vom Boden des Fahrgastraumes abgenommen werden.

Um die Gleitfunktion zwischen Grundplatte und Bodenschiene zu verbessern, kann es vorgesehen sein, Gleitelemente zwischen diesen Elementen zu lagern. Beispielsweise können Gleitscheiben an den Führungsbolzen vorgesehen sein, die zwischen Grundplatte und Bodenschiene positioniert sind.

Eine einzelne Sitzkonsole kann nun eine einzelne Grundplatte aufweisen, die in einer einzelnen oder in mehreren Bodenschienen gehalten ist. Sind mehrere Bodenschienen vorliegend, so sind pro Bodenschiene ein oder mehrere Führungsstifte vorgesehen. Es muss nicht in jeder Führungsschiene ein jeweiliger Spannbolzen vorgesehen sein, mindestens jedoch ein einzelner Spannbolzen in irgendeiner der Bodenschienen. Zur Erhöhung eines Klemmsitzes zwischen Grundplatte und Bodenschiene können jedoch mehrere Spannbolzen pro Bodenschiene oder ein jeweiliger Spannbolzen pro Bodenschiene vorteilhaft sein.

Neben dem durch den Spannbolzen verursachten Klemmsitz zwischen Grundplatte und Bodenschiene ist erfindungsgemäß ferner ein Zentrierbolzen vorgesehen, der an der Grundplatte derart gehalten ist, dass er in Richtung seiner Längsachse verfahrbar ist. In einer Endposition seiner Verschiebung kann er in Arretieröffnungen der Bodenschiene einrasten. Die Arretieröffnungen der Bodenschiene sind in vorteilhafter Weise den vormals erwähnten Ausnehmungen entsprechend, die zum Abnehmen der Führungsbolzen aus der Bodenschiene in selbige eingearbeitet sind.

Erfindungsgemäß ist nun vorgesehen, dass mit Einrasten des Zentrierbolzens in eine Arretieröffnung einer Bodenschiene nachfolgend des Erreichens seiner letztendlichen Arretierposition auch der Spannbolzen seinen Klemmkontakt zur Bodenschiene schafft. Der Zentrierbolzen sollte immer zuerst in der Arretieröffnung einrasten, bevor der Spannbolzen seinen Klemmkontakt mit der Bodenschiene erreicht. Dadurch ist gewährleistet, dass die Grundplatte so lange verschiebbar gehalten bleibt, bis der Zentrierbolzen seine letztendliche Arretierposition in der Arretieröffnung erreicht hat. Das Zusammenwirken zwischen Zentrierbolzen und Arretieröffnung macht ein gewisses Spiel erforderlich, um den Zentrierbolzen nicht in der Arretieröffnung verkeilen zu lassen. Dieses Bewegungsspiel zwischen Grundplatte und Bodenschiene wird nun durch den Klemmkontakt zwischen Spannbolzen und Bodenschiene eliminiert, sodass die Grundplatte spielfrei an der Bodenschiene fixiert ist. Sind mehrere Bodenschienen für eine einzelne Grundplatte vorgesehen, so ist mindestens ein Zentrierbolzen für den Bodenschienen-Verbund vorzusehen.

Es können aber auch mehrere Zentrierbolzen pro einzelner Bodenschiene und/oder mehrere Zentrierbolzen für jeweilige Bodenschienen vorgesehen sein.

Der Zentrierbolzen ist in vorteilhafter Weise relativ zur Grundplatte mit einer Feder vorgespannt, so dass er automatisch bei Erreichen einer Ausnehmungs-öffnung im Bodenschienenprofil in eine Arretieröffnung einrastet.

Um den Zentrierbolzen zusammen mit dem Spannbolzen in der jeweiligen Funktion eines Arretierens und Dearretierens wirken lassen zu können, ist ein Hebelmechanismus vorgesehen. Der Hebelmechanismus weist einen Bedienhebel auf, den ein Fahrgast zum Verstellen der Sitzkonsole betätigen kann. An dem Bedienhebel sind sowohl der Zentrierbolzen als auch der Spannbolzen angelenkt. Beim Betätigen des Bedienhebels zum Arretieren der Sitzkonsole wird dieser abgesenkt, sodass zunächst der Zentrierbolzen abgesenkt wird. Entweder gerät er mit seiner Federvorspannung auf die Grundplatte oder er verfährt gleich in eine Arretieröffnung. Kommt er auf der Grundplatte zu liegen, so muss die Grundplatte noch derart verschoben werden, bis der Zentrierbolzen automatisch in das nächstliegende Arretierloch einfährt. Anschließend wird der Spannbolzen angehoben, um den Klemmsitz zwischen Grundplatte und Bodenschiene zu schaffen.

Beim Betätigen des Bedienhebels zum Dearretieren der Sitzkonsole, d.h. zum Lösen der Arretierung zwischen Bodenschiene und Grundplatte wird in umgekehrter Reihenfolge zum Arretieren zunächst der Klemmkontakt gelöst, indem durch den Bedienhebel der Spannbolzen gelöst wird, und danach wird der Zentrierbolzen über einen am Bedienhebel angelenkten Mitnehmer angehoben. In vorteilhafter Weise kann vorgesehen sein, dass der Spannbolzen mit einer Feder beaufschlagt ist, die den Spannbolzen ohne weitere Krafteinwirkung in seinen Klemmsitz presst.

Überdies kann es vorteilhaft sein, dass auch das Stellglied zur Betätigung des Spannbolzens federvorgespannt ist, welche Federvorspannung zur Unterstützung, bzw. zur Schaffung des Klemmkontaktes zwischen Spannbolzen und Grundplatte dient. In diesem Zusammenhang kann es vorteilhaft sein, den Spannbolzen mit einem gewissen Spiel, beispielsweise in einem Langloch, zu führen, sodass die Federvorspannung den Spannbolzen in eine Position treibt, die den Klemmkontakt zu schaffen versucht.

Erfindungsgemäß ist vorgesehen, dass der Spannbolzen einen Keil aufweist, der mit einer zur horizontalen abgewinkelten Kontaktfläche mit einem Schieber zusammenwirkt, welcher Schieber auch zu dem besagten Stellglied des Spannbolzens gehört. Der Schieber wird über den Bedienhebel so auf der Grundplatte verfahren, dass durch die komplementär zueinander wirkenden geneigten Flächen von einerseits dem Schieber und andererseits dem Keil der Spannbolzen in seinen Klemmkontakt verfahren wird.

Gemäß einer weiteren vorteilhaften Ausführungsform ist auch der Bedienhebel derart federvorgespannt, dass er in einer Ruheposition gehalten wird. Zusätzlich oder alternativ könnte der Bedienhebel auch mit einer Taste versehen werden, die zum Lösen einer Verriegelung des Bedienhebels aus seiner Ruhestellung betätigbar ist, wenn man eine über die durch obige Vorspannung hinausgehende Sicherheit einer Verriegelung benötigte.

Einzelheiten und Vorzüge der Erfindung ergeben sich aus der nachfolgenden Beschreibung eines bevorzugten Ausführungsbeispiels anhand der folgenden Zeichnungen. In diesen zeigen:
- Fig. 1 eine perspektivische Ansicht der erfindungsgemäßen Sitzkonsole;
- Fig. 2 eine geschnittene Seitenansicht der Sitzkonsole aus Fig. 1;
- Fig. 3 eine weitere geschnittene Seitenansicht von vorne der in Fig. 1 gezeigten Sitzkonsole;
- Fig. 4 die Sitzkonsole aus Fig. 1 in Draufsicht; und
- Fig. 5 eine Ansicht von unten auf die Grundplatte der in Fig. 1 gezeigten Sitzkonsole.

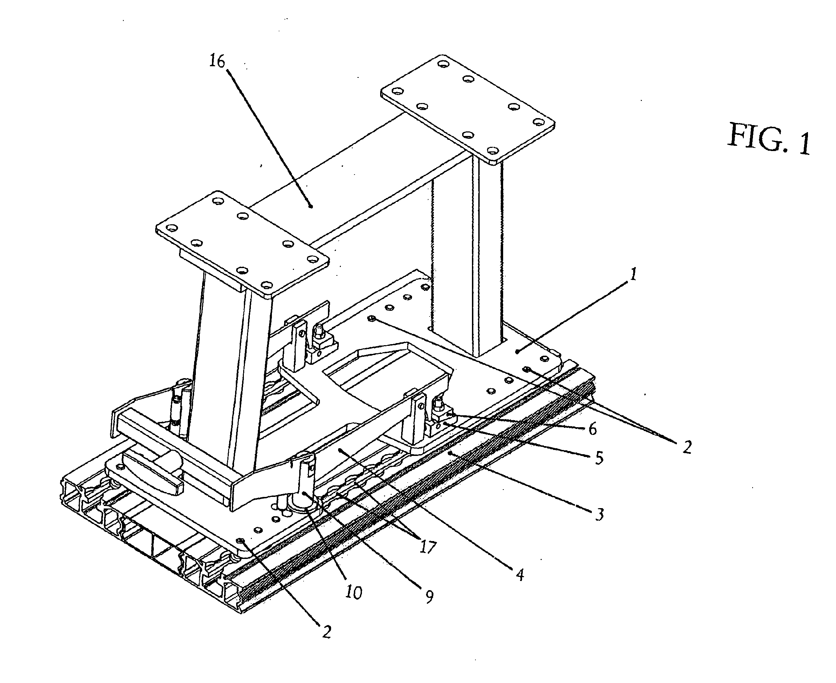

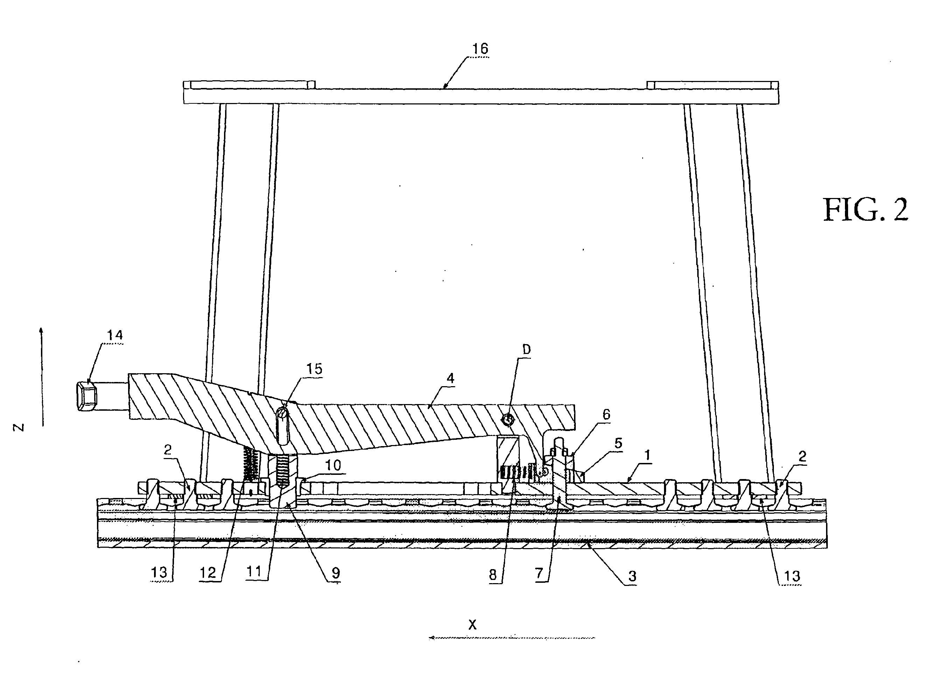

In Fig. 1 ist ein Ausführungsbeispiel der erfindungsgemäßen Sitzkonsole gezeigt, gemäß der eine Grundplatte 1 in zwei zueinander parallelen Bodenschienen 3 verschiebbar gehalten ist. Die beiden Bodenschienen 3 sind mit Hilfe eines Zwischenprofils miteinander verbunden. In diesem Verbund können die Bodenschienen mit Zwischenprofil in einem Boden des Fahrgastraumes integriert oder darauf montiert sein. Auf der Grundplatte 1 ist ein Adapter 16 montiert, der seinerseits die Sitzschale (nicht gezeigt) des Fahrgastsitzes trägt. Der Fahrgastsitz ist über die Sitzkonsole u.a. derart verstellbar, indem die Grundplatte 1 entlang der Bodenschienen verfahren wird. Die Sitzkonsole kann mitsamt des Fahrgastsitzes demontiert werden, indem die Grundplatte 1 von dem Bodenschienenverbund gelöst und abgehoben wird. Wie das insbesondere aus der Schnittzeichnung in Fig. 2 hervorgeht, sind an der Grundplatte 1 pro Bodenschiene 3 mehrere regelmäßig zueinander beabstandete Führungsbolzen vorgesehen. Diese Führungsbolzen betreffen zum einen Führungsstifte 2, die auf der Unterseite der Grundplatte 1 mit dieser feststehend verbunden sind, d.h. diese beispielsweise mit der Grundplatte 1 verschraubt sein können und die Grundplatte in Parallelrichtung zu den Bodenschienen halten. Zum anderen betreffen die Führungsbolzen Spannbolzen, die einen Klemmkontakt zwischen Bodenschiene und Grundplatte schaffen.

Auf der Oberseite der Grundplatte 1 ist ein Bedienhebel 4 vorgesehen, der über einen Drehpunkt D (siehe Figur 2) verschwenkbar ist. An dem Bedienhebel 4 ist pro Bodenschiene 3 jeweils ein Zentrierbolzen 9 angelenkt. Der Zentrierbolzen 9 kann auf der Unterseite der Grundplatte 1 jeweils in Arretieröffnungen 17 einragen, um die Grundplatte 1 gegenüber dem Bodenschienenverbund zu fixieren. Der Zentrierbolzen 9 ist somit entlang seiner Längsachse in Vertikalrichtung zur Grundplatte 1 in einer Buchse 10 der Grundplatte verschiebbar gehalten.

Durch Anheben des Bedienhebels 4 wird der Zentrierbolzen 9 über einen Mitnehmer 15 in einer Führungsfuge angehoben und damit aus seiner Arretieröffnung 17 gelöst. Der Zentrierbolzen 9 ist mittels einer Feder 11 gegenüber der Grundplatte 1 vorgespannt, welche Kraft dazu führt, dass der Zentrierbolzen 9 immer in eine Arretieröffnung 17 gedrängt wird, sowie der Bedienhebel 4 in seiner durch die Zugfeder 12 vorgespannten Ruhestellung bewegt worden ist. An dem Bedienhebel 4 befindet sich ein Griff 14, mit dem der Bedienhebel 4 in seine und aus seiner Ruhestellung bewegt werden kann.

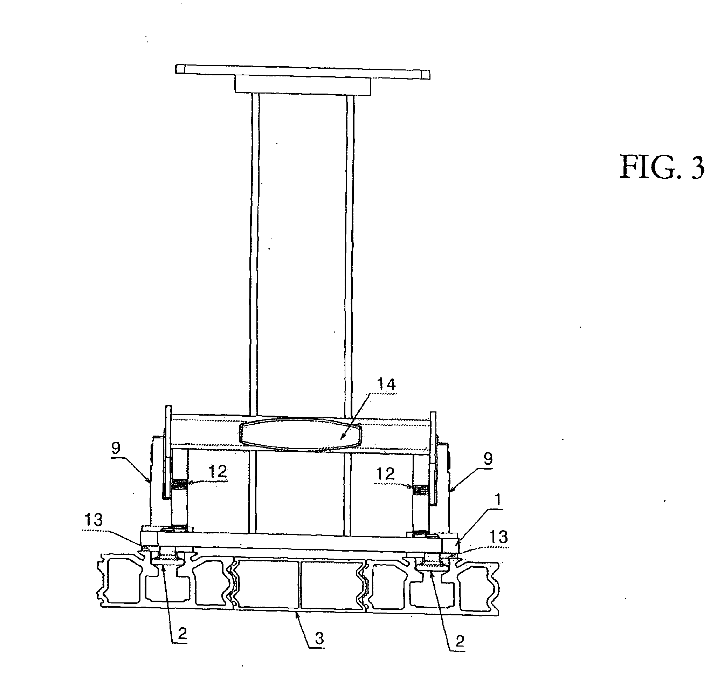

An dem über den Drehpunkt D gegenüberliebenden Ende vom Zentrierbolzen 9 ist ein Stellglied zur Betätigung eines Spannbolzens 7 angeordnet. Der Spannbolzen 7 ist auf der Grundplatte 1 in einer Führung gehalten, die eine axiale Verschiebung des Spannbolzens 7 - der eine spezielle Art des Führungsbolzens ist - ermöglicht. Der Spannbolzen 7 weist einen pilzförmigen Kopf auf, mit dem der Spannbolzen in der Bodenschiene 3 reibschlussfrei verfahrbar ist. Erst zum Festlegen der Grundplatte 1 gegenüber der Bodenschiene wird der Spannbolzen 7 durch eine axiale Verschiebung in einen Klemmkontakt zwischen Endkopf des Spannbolzens 7 und der Bodenschiene 3 gebracht. Die Führungsstifte 2, die mit ihren Köpfen ebenfalls in dem C-Profil der Bodenschiene 3 verfahrbar gehalten sind, bewirken zu keiner Zeit einen Reibschluss mit der Bodenschiene 3. Die Führungsstifte 2 dienen vornehmlich der seitwärtigen Fixierung der Grundplatte 1 gegenüber dem Bodenschienenverbund (siehe insbesondere hierzu Fig. 3), d.h. Schutz vor einer Bewegung in einer zur Parallelen der Bodenschienenachse abgewinkelten Richtung.

In der jeweiligen Bodenschiene sind Arretieröffnungen 17 vorgesehen, die einerseits den Zentrierbolzen 9 zum Fixieren der Grundplatte 1 aufnehmen können; ferner sind diese Arretieröffnungen zu den pilzförmigen Köpfen der Führungsstifte 2 einerseits und der Spannbolzen 7 andererseits so dimensioniert, dass diese Köpfe an den Positionen der Arretieröffnungen aus der Bodenschiene 3 herausnehmbar sind. Damit kann die Grundplatte 1 von dem Bodenschienenverbund abgenommen werden. Hierzu ist ferner erforderlich, dass die Abstände der Arretieröffnungen 17 den Abständen der Führungsstifte 2, bzw. den Spannbolzen 7 zueinander entsprechen.

Zum Arretieren der Grundplatte 1 gegenüber der Bodenschiene ist durch Absenken des Bedienhebels 4 nun vorgesehen, dass der jeweilige Zentrierbolzen 9 in eine nächstliegende Arretieröffnung 17 einrastet, wobei zeitlich nachfolgend einer Verrastung des Zentrierbolzens 9 der Spannbolzen 7 angehoben und in einen Klemmkontakt mit der jeweiligen Bodenschiene 3 gebracht wird. Damit der Zentrierbolzen 9 immer zuerst einrastet, bevor der Spannbolzen 7 seinen Klemmsitz erreicht, ist der Drehpunkt D des Bedienhebels zusammen mit dem am Bedienhebel für den Mitnehmer 15 vorgesehenen Langloch so auszulegen, dass die besagte Reihenfolge der Arretierzyklen realisiert ist.

Mit dem Herabdrücken des Bedienhebels 4 wird über eine Hebelwirkung am hinteren Ende des Bedienhebels auch ein Schieber 5 bewegt, der auf der Grundplatte 1 gleitet. Der Schieber 5 hat an seiner Oberseite eine Schräge, die mit einem komplementären Keil 6 zusammenwirkt. Der Schieber 5 ist in einem Langloch gehalten und mit einer Feder 8 vorgespannt, die an einer vom Bedienhebel 4 nach unten abragenden Verlängerung eingehängt ist. Der Keil 6 ist an dem Spannbolzen 7 angelenkt, so dass durch Verschieben des Schiebers 5 und dem auf seiner oberen Oberfläche entlang gleitenden Keil 6 der Spannbolzen 7 nach oben und unten verfahren wird, und zwar in Abhängigkeit der jeweiligen Verschiebungsrichtung des Schiebers 5. Wird nun der Bedienhebel 4 in seine untere Ruhestellung gebracht, wird u.a. der Schieber 5 in "X-" Richtung (siehe Fig. 2) auf der Grundplatte 1 verschoben, womit der Spannbolzen 7 über den Keil 6 angehoben wird, so dass der Kopf des Spannbolzens in einen Klemmkontakt in der Bodenschiene 3 gerät. Die Feder 8 wirkt auf den Schieber 5 derart, dass eine Klemmwirkung des Spannbolzens 7 unterstützt wird. Dabei ist eine Verschiebbarkeit des Schiebers 5 aufgrund des Langlochs noch möglich, auch wenn der Bedienhebel 4 in eine fixierte Ruhestellung gebracht worden ist. Mit anderen Worten wirkt mit der Federvorspannung eine Kraft auf den Schieber 5 derart, dass ein Spiel zwischen Schieber 5 und Keil 6 möglichst in jedem Zustand des Bedienhebels eliminiert ist und der Spannbolzen 7 nicht aus seinem Klemmkontakt gerät, solange der Bedienhebel 4 in seiner Ruhestellung ist.

Der Bedienhebel 4 ist mit einer Feder 12 so vorgespannt, dass er in seine untere, eine Arretierung hervorrufende Position gezogen oder gedrückt wird.

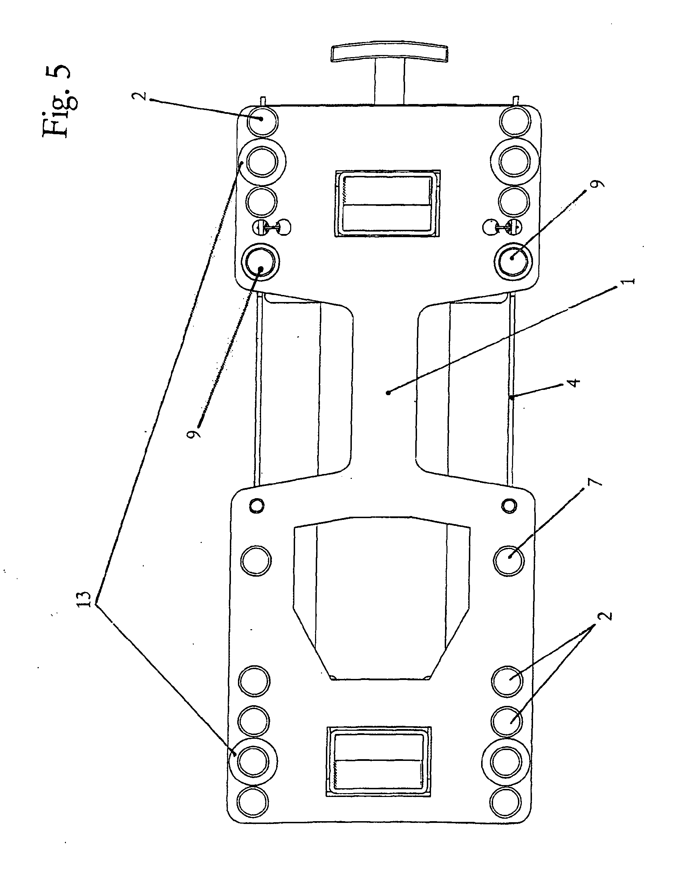

Mit Bezug auf Figur 3 ist zu erkennen, wie die Führungsstifte 2 in dem C-Profil der Bodenschiene 3 ruhen und die Grundplatte 1 vor einer seitwärtigen Verschiebung gegenüber der Bodenschiene 3 bewahren. In dieser Fig. ist auch deutlich zu ersehen, dass zwischen der Bodenschiene 3 und der Grundplatte 1 ein Gleitelement 13 angeordnet ist, das ein Gleiten der Grundplatte auf der Bodenschiene verbessert. Dieses Gleitelement 13 ist bei der vorliegenden Ausführungsform eine jeweilige an einzelnen Führungsstiften 2 angelegte Ringscheibe (siehe insbesondere Fig. 5).

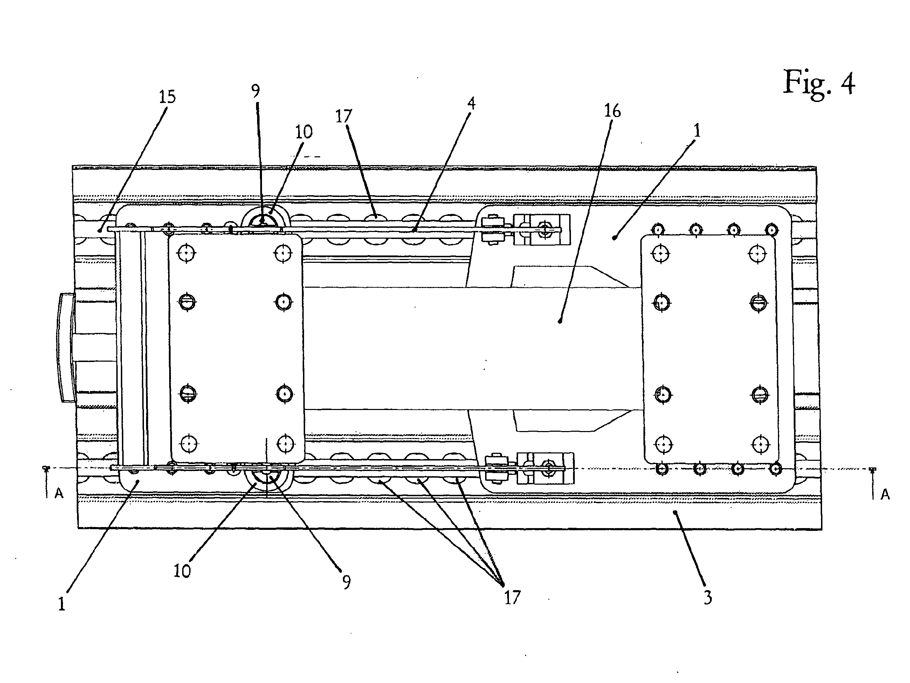

Fig. 4 zeigt die erfindungsgemäße Ausführungsform der Sitzkonsole in einer Draufsicht von oben.

Fig. 5 zeigt die Ansicht von unten auf die Grundplatte der in Fig. 1 gezeigten Sitzkonsole.

Bei Bedarf können auch mehrere Spannbolzen 7 vorgesehen werden, die nicht mittig, sondern an den beiden Endbereichen der Grundplatte vorgesehen sind.

### Bezugszeichenliste:

- 1: Grundplatte
- 2: Führungsstift / Pilzkopf
- 3: Bodenschiene
- 4: Bedienhebel
- 5: Schieber
- 6: Keil
- 7: Spannbolzen
- 8: Feder
- 9: Zentrierbolzen
- 10: Buchse
- 11: Feder
- 12: Zugfeder
- 13: Gleitelement
- 14: Griff
- 15: Führungsnut
- 16: Adapter
- 17: Arretieröffnung

## Patentansprüche

1. Sitzkonsole für einen Fahrgastsitz mit einer den Sitz tragenden Grundplatte (1), die gegenüber einer fest installierbaren Bodenschiene (3) bewegbar gehaltenen ist, wobei die Grundplatte (1) nach unten abragende fixierte Führungsstifte (2), die in einer Führungsnut (15) der Bodenschiene (3) verfahrbar sind, und mindestens einen entlang seiner Längsachse mithilfe eines Bedienhebels (4) verstellbaren Zentrierbolzen (9) aufweist, der in einer komplementären Arretieröffnung (17) der Bodenschiene (3) verrastbar ist, wobei mindestens ein an der Grundplatte (1) angelenkter Spannbolzen (7) vorgesehen ist, der entlang seiner Längsachse mithilfe eines Stellgliedes zu seiner Fixierung relativ zur Bodenschiene (3) verschiebbar ist, welches Stellglied mittels des Bedienhebels (4) betätigbar ist, **dadurch gekennzeichnet, dass** das Stellglied einen auf der Grundplatte (1) verfahrbar gehaltenen Schieber (5) aufweist, der mit einem am Spannbolzen (7) angeordneten Keil (6) zusammenwirkt.

2. Sitzkonsole nach Anspruch 1,
**dadurch gekennzeichnet, dass** der mindestens eine Spannbolzen (7) einen in die Führungsnut (15) einragbaren Spannkopf aufweist, der mit der Führungsnut (15) in einer Arretierposition zwischen Grundplatte (1) und Bodenschiene (3) einen den Spannbolzen (7) fixierenden Klemmkontakt bildet.

3. Sitzkonsole nach Anspruch 1 oder 2,
**dadurch gekennzeichnet, dass** das Stellglied am Bedienhebel angelenkt ist, sodass gleichzeitig zu einer Bewegung des Zentrierbolzens (9) durch den Bedienhebel (4) der Spannbolzen (7) in zum Zentrierbolzen (9) entgegengesetzter Richtung verfahren wird.

4. Sitzkonsole nach Anspruch 3,
**dadurch gekennzeichnet, dass** das Stellglied am Bedienhebel derart angelenkt ist, dass ein Klemmkontakt zwischen Spannbolzen und Grundplatte (1) erst dann realisiert ist, nachdem der Zentrierbolzen (9) seine Endstellung in einer Arretieröffnung (17) eingenommen hat.

5. Sitzkonsole nach einem der vorangehenden Ansprüche,
**dadurch gekennzeichnet, dass** das Stellglied zur Betätigung des Spannbolzens (7) federvorgespannt ist, wobei die Federvorspannung zur Unterstützung, bzw. Schaffung des Klemmkontaktes zwischen Spannbolzen und Grundplatte wirkt.

6. Sitzkonsole nach einem der vorangehenden Ansprüche,
**dadurch gekennzeichnet, dass** der Bedienhebel (4) federvorgespannt ist, derart, dass ohne Krafteinwirkung auf den Bedienhebel dieser den Zentrierbolzen (9) in eine Arretierposition und den Spannbolzen (7) in einen Klemmkontakt mit der Grundplatte (1) drängt.

7. Sitzkonsole nach einem der vorangehenden Ansprüche,
**dadurch gekennzeichnet, dass** der Zentrierbolzen (9) gegenüber dem Bedienhebel mit einer Feder vorgespannt ist.

## Claims

1. Seat support assembly for a passenger seat with a base plate (1) which carries the seat and is mounted so as to be moveable in relation to a floor rail (3) which can be installed immovably, the base plate (1) exhibiting downwardly projecting fixed locating pins (2) which are displaceable in a guide slot (15) of the floor rail (3), and at least one centering stud (9) which is adjustable along its longitudinal axis with the aid of an operating lever (4) and lockable in a complementary detent opening (17) of the floor rail (3), with at least one clamping stud (7) which is articulated with the base plate (1) and displaceable along its longitudinal axis with the aid of an adjusting member for its fixture relative to the floor rail (3), which adjusting member can be operated by means of the operating lever (4), **characterised in that** the adjusting member exhibits a slide (5) which is mounted displaceably on the base plate (1) and cooperates with a wedge (6) arranged on the clamping stud (7).

2. Seat support assembly according to claim 1, **characterised in that** the at least one clamping stud (7) exhibits a clamping head which can be engaged in the guide slot (15) and with the guide slot (15) forms a clamping contact fixing the clamping stud (7) in a detent position between the base plate (1) and the floor rail (3).

3. Seat support assembly according to claim 1 or 2, **characterised in that** the adjusting member is articulated with the operating lever so that when the centering stud (9) is moved by the operating lever (4), the clamping stud (7) is simultaneously displaced in the opposite direction to the centering stud (9).

4. Seat support assembly according to claim 3, **characterised in that** the adjusting member is articulated with the operating lever in such a way that a clamping contact is only created between the clamping stud and the base plate (1) when the centering stud (9) has reached its end position in a detent opening (17).

5. Seat support assembly according to one of the preceding claims, **characterised in that** the adjusting member for operation of the clamping stud (7) is spring-loaded, the spring-loading acting to assist or create the clamping contact between the clamping stud and the base plate.

6. Seat support assembly according to one of the preceding claims, **characterised in that** the operating lever (4) is spring-loaded in such a way that without any force being applied to the operating lever the operating lever forces the centering stud (9) into a detent position and the clamping stud (7) into a clamping contact with the base plate (1).

7. Seat support assembly according to one of the preceding claims, **characterised in that** the centering stud (9) is pre-loaded in relation to the operating lever with a spring.

## Revendications

1. Console d'assise pour un siège passager avec une plaque de base (1) qui porte le siège et est maintenue de manière mobile par rapport à un rail de sol (3) pouvant être installé fixement, la plaque de base (1) présentant des tiges de guidage (2) fixées dépassant vers le bas qui sont déplaçables dans une rainure de guidage (15) du rail de sol (3), et au moins un boulon de centrage (9) réglable le long de son axe longitudinal à l'aide d'un levier de commande (4), lequel boulon peut être encliqueté dans une ouverture d'arrêt (17) complémentaire du rail de sol (3), au moins un boulon de serrage (7) articulé à la plaque de base (1) étant prévu, lequel est mobile le long de son axe longitudinal à l'aide d'un organe de réglage pour sa fixation par rapport au rail de sol (3), lequel organe de réglage peut être actionné à l'aide du levier de commande (4), **caractérisée en ce que** l'organe de réglage présente un coulisseau (5) qui est maintenu de manière mobile sur la plaque de base (1) et coagit avec un coin (6) disposé sur le boulon de serrage (7).

2. Console d'assise selon la revendication 1, **caractérisée en ce que** l'au moins un boulon de serrage (7) présente une tête de serrage pouvant pénétrer dans la rainure de guidage (15), laquelle tête forme avec la rainure de guidage (15) dans une position d'arrêt entre la plaque de base (1) et le rail de sol (3) un contact de serrage fixant le boulon de serrage (7).

3. Console d'assise selon la revendication 1 ou 2, **caractérisée en ce que** l'organe de réglage est articulé au levier de commande de sorte que le boulon de serrage (7) soit déplacé dans le sens opposé au boulon de centrage (9) simultanément à un déplacement du boulon de centrage (9) par le levier de commande (4).

4. Console d'assise selon la revendication 3, **caractérisée en ce que** l'organe de réglage est articulé au levier de commande de telle manière qu'un contact de serrage entre le boulon de serrage et la plaque de base (1) ne soit réalisé qu'après que le boulon de centrage (9) a occupé sa position finale dans une ouverture d'arrêt (17).

5. Console d'assise selon l'une quelconque des revendications précédentes, **caractérisée en ce que** l'organe de réglage est précontraint par ressort pour l'actionnement du boulon de serrage (7), la précontrainte par ressort agissant pour le soutien ou la création du contact de serrage entre le boulon de serrage et la plaque de base.

6. Console d'assise selon l'une quelconque des revendications précédentes, **caractérisée en ce que** le levier de commande (4) est précontraint par ressort de telle manière que sans action de la force sur le levier de commande, celui-ci déplace le boulon de centrage (9) dans une position d'arrêt et le boulon de serrage (7) dans un contact de serrage avec la plaque de base (1).

7. Console d'assise selon l'une quelconque des revendications précédentes, **caractérisée en ce que** le boulon de centrage (9) est précontraint par un ressort par rapport au levier de commande.
